# EUROPÄISCHE PATENTSCHRIFT

(11) **EP 0 646 741 B1**
(45) Veröffentlichungstag und Bekanntmachung des Hinweises auf die Patenterteilung: **04.09.1996**
(21) Anmeldenummer: 93115203.7
(22) Anmeldetag: 21.09.1993
(51) Int. Cl.: F16K 1/44

(54) **Leckagefrei schaltende Doppelventilanordnung**
Leakproof double seat valve
Vanne à double siège à fermeture sans fuite

(43) Veröffentlichungstag der Anmeldung: 05.04.1995
(73) Patentinhaber: APV ROSISTA GMBH, D-59425 Unna (DE)
(72) Erfinder: Bräckelmann, Wolfgang, Dipl.-Ing., D-59425 Unna-Uelzen (DE); Schramm, Norbert, Dipl.-Ing., D-59427 Unna (DE); Baumbach, Frank, Dipl.-Ing., D-59495 Soest (DE)

(56) Entgegenhaltungen:
- EP-A- 0 174 384
- EP-A- 0 208 126
- EP-A- 0 545 846
- WO-A-92/21900
- DE-A- 3 030 989
- DE-A- 4 118 874

## Beschreibung

Die Erfindung betrifft eine leckagefrei schaltende Doppelventilanordnung, bestehend aus zwei Schieberventilkörpern in einem Ventilgehäuse mit Leitungsanschlüssen, wobei die beiden unabhängig voneinander betätigbaren Schieberventilkörper in Schließstellung an Ventilsitzen im Ventilgehäuse anliegend und mit Abstand hintereinander angeordnet einen Leckagehohlraum zwischen sich bilden und der eine erste Schieberventilkörper beim Öffnungsvorgang vor Verlassen seines Ventilsitzes unter Verkleinerung des Leckagehohlraumes am anderen zweiten Schieberventilkörper anlegbar ist, welcher mit einer rohrförmigen Verlängerung versehen ist, die unter Abdichtung aus dem Ventilgehäuse herausgeführt ist und den Leckagehohlraum mit der Umgebung der Ventilanordnung verbindet, und wobei die beiden Schieberventilkörper jeweils durch einen der Öffnungsbewegung entgegengerichteten Teilhub in eine Spülstellung überführbar sind.

Bei einer bekannten Doppelventilanordnung der genannten Art (WO-A-92/21900) werden erhebliche Spülmittelmengen für die Reinigung benötigt, und zwar nicht zuletzt deshalb, weil die beiden Schieberventilkörper auch in Spülstellung noch an ihren zugeordneten Ventilsitzen anliegen.

Der Erfindung liegt die Aufgabe zugrunde, eine Doppelventilanordnung der eingangs genannten Art so auszubilden, daß sie mit geringstmöglichen Spülmittelmengen einwandfrei gereinigt werden kann.

Die erfindungsgemäße Lösung dieser Aufgabe besteht darin, daß die beiden unabhängig voneinander in die jeweilige Spülstellung überführbaren Schieberventilkörper in der Spülstellung von ihrem jeweiligen Ventilsitz frei sind und an einem jeweils zugeordneten, mit Spülmitteldurchtritten versehenen Gehäuseanschlag anliegen.

Die Erfindung nutzt hierbei zunächst die bekannte Erkenntnis, daß eine Reinigung der Schieberventilkörper und zugeordneten Ventilsitze schneller und besser möglich ist, wenn die Schieberventilkörper von den zugeordneten Ventilsitzen frei sind. Wie die vorliegende Erfindung erkannt hat, ist diese Optimierung aber nur dann mit geringstmöglichen Spülmittelmengen möglich, wenn die Schieberventilkörper in der Spülstellung an den mit Spülmitteldurchtritten versehenen Gehäuseanschlägen anliegen, über die die Spülmittelmenge optimal einstellbar ist.

Für die weitere Ausgestaltung bestehen im Rahmen der Erfindung mehrere Möglichkeiten. So ist nach einer bevorzugten Ausführungsform vorgesehen, daß der erste Schieberventilkörper einen kleineren Durchmesser als der zweite Schieberventilkörper aufweist. In konstruktiver Hinsicht ergeben sich einfache Verhältnisse, wenn wie nach bevorzugter Ausführungsform der erste Schieberventilkörper auf seiner dem zweiten Schieberventilkörper zugewandten Seite einen Anschlagflanschrand für den zugeordneten Gehäuseanschlag und/oder beide Schieberventilkörper jeweils eine Anschlagfase für den zugeordneten Gehäuseanschlag aufweist. Günstig ist es auch, wenn die Ventilsitze mit Dichtringen versehen sind, die von Gehäuseeinsätzen gehalten sind; mit dieser Ausbildung ist ein leichter Austausch der Dichtringe möglich.

Zweckmäßigerweise sind die beiden Schieberventilkörper mit Hilfe eines Ventilantriebes von einer Seite her betätigbar. Hierzu empfiehlt es sich, die Anordnung so zu treffen, daß der erste Schieberventilkörper durch eine Hohlstange betätigbar ist, in der eine Betätigungsstange für den zweiten Schieberventilkörper angeordnet ist. In diesem Zusammenhang empfiehlt sich auch eine bevorzugte Ausführungsform, bei der der erste Schieberventilkörper auf der dem zweiten Schieberventilkörper gegenüberliegenden Seite mit Abstand einen Dichtzylinder aufweist, welcher in Spülstellung zusammen mit seinem Dichtsitz durch eine Ringkammer bespülbar ist, die über eine zwischen der Hohlstange und der Betätigungsstange geführte Verbindungsleitung mit dem Leckagehohlraum in Verbindung steht; diesem Dichtzylinder wird man zweckmäßigerweise dieselbe Fläche wie dem ersten Schieberventilkörper geben, um ein Öffnen des Ventils bei Druckschlägen zu verhindern.

Im folgenden wird die Erfindung anhand einer ein Ausführungsbeispiel darstellenden Zeichnung näher erläutert; es zeigen
- Fig. 1: eine Doppelventilanordnung, und zwar in einer Hälfte in einem Schnitt und in der anderen Hälfte in Seitenansicht und
- Fig. 2: a, b und cden Ausschnitt A aus Fig. 1 in vergrößerter Darstellung in drei verschiedenen Funktionsstellungen.

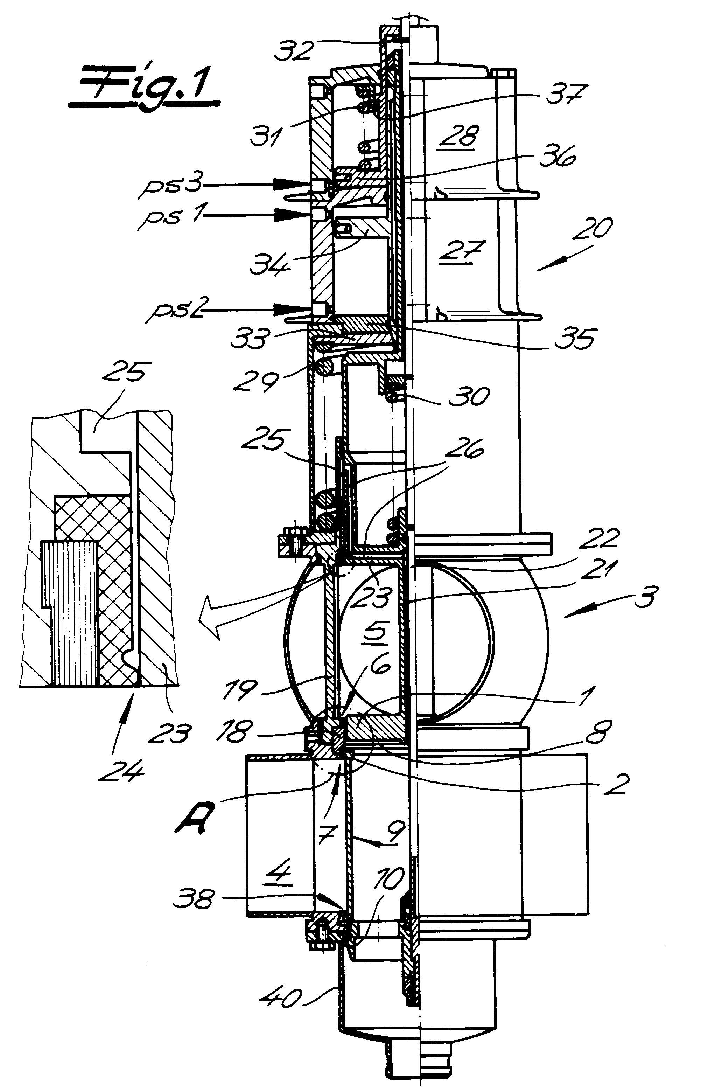

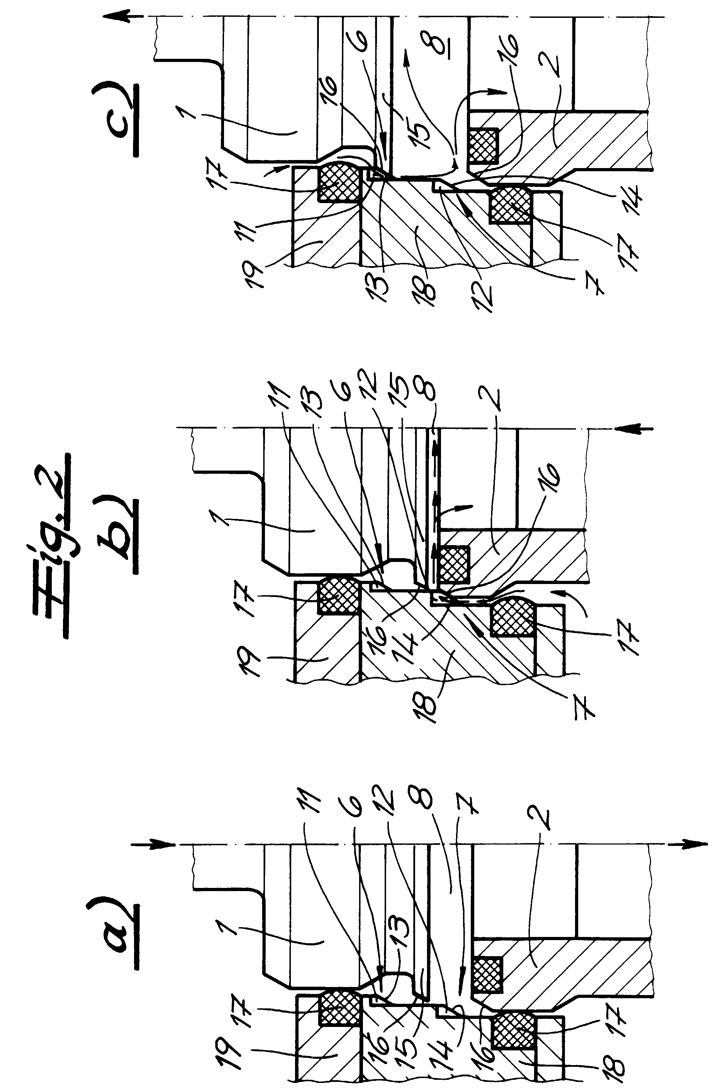

Die in den Figuren dargestellte leckagefrei schaltende Doppelventilanordnung besteht in ihrem grundsätzlichen Aufbau aus zwei Schieberventilkörpern 1, 2 in einem Ventilgehäuse 3 mit Leitungsanschlüssen 4, 5. Die beiden Schieberventilkörper 1, 2 sind unabhängig voneinander betätigbar und liegen in Schließstellung an Ventilsitzen 6, 7 im Ventilgehäuse 3 an (Fig. 1 und 2a). Die beiden Schieberventilkörper 1, 2 sind mit Abstand hintereinander angeordnet und bilden zwischen sich einen Leckagehohlraum 8. Beim Öffnungsvorgang ist der eine erste Schieberventilkörper 1 vor Verlassen seines Ventilsitzes 6 unter Verkleinerung des Leckagehohlraumes 8 am anderen zweiten Schieberventilkörper 2 anlegbar. Dieser zweite Schieberventilkörper 2 ist mit einer rohrförmigen Verlängerung 9 versehen, die unter Abdichtung aus dem Ventilgehäuse 3 herausgeführt ist und den Leckagehohlraum 8 mit der Umgebung der Ventilanordnung verbindet. Das freie Ende 10 der rohrförmigen Verlängerung 9 mündet in einem Ablaufrohr 40, das dem Schutz der Verlängerung 9 und der gesammelten Ableitung des Spülmittels dient.

Beide Schieberventilkörper 1, 2 sind unabhängig voneinander jeweils durch einen der Öffnungsbewegung entgegengerichteten Teilhub in eine Spülstellung überführbar, in der der Schieberventilkörper 1 bzw. 2 von seinem jeweiligen Ventilsitz 6 bzw. 7 frei ist und an einem mit Spülmitteldurchtritten 11 bzw. 12 versehenen Gehäuseanschlag 13 bzw. 14 anliegt (Fig. 2b bzw. 2c). Im einzelnen weist der erste Schieberventilkörper 1 einen kleineren Durchmesser als der zweite Schieberventilkörper 2 auf. Der erste Schieberventilkörper 1 ist auf seiner dem zweiten Schieberventilkörper 2 zugewandten Seite mit einem Anschlagflanschrand 15 für den zugeordneten Gehäuseanschlag 13 versehen. Im übrigen weisen beide Schieberventilkörper 2 eine Anschlagfase 16 für den jeweils zugeordneten Gehäuseanschlag 14 auf, der entsprechend gestaltet ist.

Die Ventilsitze 6, 7 sind mit Dichtringen 17 versehen, die von Gehäuseeinsätzen 18, 19 gehalten sind. Diese Gehäuseeinsätze 18, 19 sind von der der Verlängerung 9 gegenüberliegenden Seite her in das Ventilgehäuse 3 eingesetzt. Von derselben Seite her sind auch die beiden Schieberventilkörper 1, 2 mit Hilfe eines Ventilantriebes 20 betätigbar. Dabei ist der erste Schieberventilkörper 1 durch eine Hohlstange 21 betätigbar, in der eine Betätigungsstange 22 für den zweiten Schieberventilkörper 2 angeordnet ist. Der erste Schieberventilkörper 1 ist auf der dem zweiten Schieberventilkörper 2 gegenüberliegenden Seite mit Abstand mit einem Dichtzylinder 23 versehen, der in Spülstellung zusammen mit seinem Dichtsitz 24 durch eine Ringkammer 25 bespülbar ist, die über eine zwischen der Hohlstange 21 und der Betätigungsstange 22 geführte Verbindungsleitung 26 mit dem Leckagehohlraum 8 in Verbindung steht.

Die Funktionsweise der beschriebenen Doppelventilanordnung ergibt sich unschwer aus einer vergleichenden Betrachtung der Fig. 1 und 2a, b und c. In der in Fig. 1 und 2a gezeigten Stellung ist der Ventilantrieb 20 ausgeschaltet bzw. sind die zugeordneten Anlüftzylinder 27, 28 drucklos. Die Schieberventilkörper 1, 2 werden durch eine Hauptfeder 29 und eine Zentralfeder 30 geschlossen gehalten. Hierbei wirkt die Zentralfeder 30 gegen eine Anlüftzylinderfeder 31 über einen Schaftanschlag 32. Der Anschlag für die Hauptfeder 29 ist ein Federhaubendeckel 33. Zum Öffnen der Doppelventilanordnung bewegt ein Steuerdruck ps 1 einen Hauptkolben 34 des Anlüftzylinders 27 gegen die Wirkung der Hauptfeder 29 nach unten gegen einen Zylinderdeckel 35. Der erste Schieberventilkörper 1 trifft nach einem Teilhub auf den zweiten Schieberventilkörper 2, beide gehen dann zusammen in Offenstellung. Beim Entlüften von ps 1 wird die Schließstellung wieder durch die Hauptfeder 29 erreicht. Zum Anlüften des ersten Schieberventilkörpers 1 (Fig. 2c) bewegt ein Steuerdruck ps 2 den Hauptkolben 34 und damit die Hohlstange 21 sowie den ersten Schieberventilkörper 1 entgegen der Zentralfeder 30 in Anschlagposition am Gehäuseanschlag 13. Es erfolgt nun ein Spülen des ersten Schieberventilkörpers 1 sowie des zugeordneten Ventilsitzes 6 und darüber hinaus des Dichtzylinders 23 sowie des zugeordneten Dichtsitzes 24. Bei Entlüften von ps 2 wird die Schließstellung mittels der Zentralfeder 30 erreicht. Zum Anlüften des zweiten Schieberventilkörpers 2 (Fig. 2b) bewegt ein Steuerdruck ps 3 einen Kolben 36 des Anlüftzylinders 28 gegen einen Anschlag 37 am Zylinderdeckel. Damit wird der Schaftanschlag 32 der Zentralfeder 30 freigegeben und der zweite Schieberventilkörper 2 fährt gegen den Gehäuseanschlag 14. Es erfolgt nun das Spülen des zweiten Schieberventilkörpers 2 mit dem zugeordneten Ventilsitz 7. Zugleich wird auch eine untere Schaftdichtung 38 und damit die außenliegende Fläche der rohrförmigen Verlängerung gereinigt. Beim Entlüften von ps 3 bewegt die Anlüftzylinderfeder 31 den zweiten Schieberventilkörper 2 über die Betätigungsstange 22 gegen die Zentralfeder 30 in Schließstellung.

## Patentansprüche

1. Leckagefrei schaltende Doppelventilanordnung, bestehend aus zwei Schieberventilkörpern (1, 2) in einem Ventilgehäuse (3) mit Leitungsanschlüssen (4, 5), wobei die beiden unabhängig voneinander betätigbaren Schieberventilkörper (1, 2) in Schließstellung an Ventilsitzen (6, 7) im Ventilgehäuse (3) anliegend und mit Abstand hintereinander angeordnet einen Leckagehohlraum (8) zwischen sich bilden und der eine erste Schieberventilkörper (1) beim Öffnungsvorgang vor Verlassen seines Ventilsitzes (6) unter Verkleinerung des Leckagehohlraumes (8) am anderen zweiten Schieberventilkörper (2) anlegbar ist, welcher mit einer rohrförmigen Verlängerung (9) versehen ist, die unter Abdichtung aus dem Ventilgehäuse (3) herausgeführt ist, und den Leckagehohlraum (8) mit der Umgebung der Ventilanordnung verbindet, und wobei die beiden Schieberventilkörper (1,2) jeweils durch einen der Öffnungsbewegung entgegengerichteten Teilhub in eine Spülstellung überführbar sind, **dadurch gekennzeichnet,** daß die beiden unabhängig voneinander in die jeweilige Spülstellung überführbaren Schieberventilkörper (1, 2) in der Spülstellung von ihrem jeweiligen Ventilsitz (6 bzw. 7) frei sind und an einem jeweils zugeordneten mit Spülmitteldurchtritten (11 bzw. 12) versehenen Gehäuseanschlag (13 bzw. 14) anliegen.

2. Doppelventilanordnung nach Anspruch 1, dadurch gekennzeichnet, daß der erste Schieberventilkörper (1) einen kleineren Durchmesser als der zweite Schieberventilkörper (2) aufweist.

3. Doppelventilanordnung nach Anspruch 1 oder 2, dadurch gekennzeichnet, daß der erste Schieberventilkörper (1) auf seiner dem zweiten Schieberventilkörper (2) zugewandten Seite einen Anschlagflanschrand (15) für den zugeordneten Gehäuseanschlag (13) aufweist.

4. Doppelventilanordnung nach einem der Ansprüche 1 bis 3, dadurch gekennzeichnet, daß die beiden Schieberventilkörper (1,2) jeweils eine Anschlagfase (16) für den zugeordneten Gehäuseanschlag (13, 14) aufweisen.

5. Doppelventilanordnung nach einem der Ansprüche 1 bis 4, dadurch gekennzeichnet, daß die Ventilsitze (6, 7) mit Dichtringen (17) versehen sind, die von Gehäuseeinsätzen (18, 19) gehalten sind.

6. Doppelventilanordnung nach einem der Ansprüche 1 bis 5, dadurch gekennzeichnet, daß die beiden Schieberventilkörper (1, 2) mit Hilfe eines Ventilantriebes (20) von einer Seite her betätigbar sind.

7. Doppelventilanordnung nach Anspruch 6, dadurch gekennzeichnet, daß der erste Schieberventilkörper (1) durch eine Hohlstange (21) betätigbar ist, in welcher eine Betätigungsstange (22) für den zweiten Schieberventilkörper (2) angeordnet ist.

8. Doppelventilanordnung nach Anspruch 7, dadurch gekennzeichnet, daß der erste Schieberventilkörper (1) auf der dem zweiten Schieberventilkörper (2) gegenüberliegenden Seite mit Abstand einen Dichtzylinder (23) aufweist, welcher in Spülstellung zusammen mit seinem Dichtsitz (24) durch eine Ringkammer (25) bespülbar ist, die über eine zwischen der Hohlstange (21) und der Betätigungsstange (22) geführte Verbindungsleitung (26) mit dem Leckagehohlraum (8) in Verbindung steht.

## Claims

1. Double valve arrangement, operating in a leakage-free manner and comprising two slide valve bodies (1, 2) in a valve housing (3) with pipe connections (4, 5), wherein the two slide valve bodies (1, 2) are actuatable independently of each other and, in the closed position, lie adjacent valve seats (6, 7) in the valve housing (3), said bodies being disposed behind one another with a spacing therebetween and forming a leakage cavity (8) therebetween, and the first slide valve body (1) being attachable to the other second slide valve body (2) during the opening process prior to leaving its valve seat (6) so as to reduce the size of the leakage cavity (8), said second body being provided with a tubular extension member (9), which extends from the valve housing (3) with sealing and connects the leakage cavity (8) to the surrounding area of the valve arrangement, and wherein the two slide valve bodies (1, 2) are each displaceable into a rinsing position by a partial stroke orientated in opposition to the opening movement, characterised in that the two slide valve bodies (1, 2), which are displaceable into the respective rinsing position independently of each other, are free of their respective valve seat (6 or 7) in the rinsing position and abut against a respectively associated housing stop member (13 or 14), which is provided with rinsing agent passages (11 and 12 respectively).

2. Double valve arrangement according to claim 1, characterised in that the first slide valve body (1) has a smaller diameter than the second slide valve body (2).

3. Double valve arrangement according to claim 1 or 2, characterised in that the first slide valve body (1) has, on its side facing the second slide valve body (2), a flanged edge (15) for the associated housing stop member (13).

4. Double valve arrangement according to one of claims 1 to 3, characterised in that the two slide valve bodies (1, 2) each have a bevel (16) for the associated housing stop member (13, 14).

5. Double valve arrangement according to one of claims 1 to 4, characterised in that the valve seats (6, 7) are provided with sealing rings (17), which are retained by housing inserts (18, 19).

6. Double valve arrangement according to one of claims 1 to 5, characterised in that the two slide valve bodies (1, 2) are actuatable from one side by means of a valve drive (20).

7. Double valve arrangement according to claim 6, characterised in that the first slide valve body (1) is actuatable by a hollow rod (21), in which an actuating rod (22) is disposed for actuating the second slide valve body (2).

8. Double valve arrangement according to claim 7, characterised in that the first slide valve body (1) has, on the side situated opposite the second slide valve body (2), with a spacing therefrom, a sealing cylinder (23) which, together with its sealing seat (24), is rinsable in the rinsing position through an annular chamber (25), which communicates with the leakage cavity (8) via a connection pipe (26), which extends between the hollow rod (21) and the actuating rod (22).

## Revendications

1. Dispositif à double soupape à commutation sans fuite, composé de deux corps de soupape à coulisse (1, 2) dans un boîtier de soupape (3) avec des raccords de conduites (4, 5), dans lequel les deux corps de soupape à coulisse (1, 2), qui peuvent être actionnés indépendamment l'un de l'autre, s'appuyant en position fermée contre des sièges de soupape (6, 7) dans le boîtier de soupape (3) et forment entre eux un espace creux de fuite (8), en étant placés à distance l'un derrière l'autre, et le premier corps de soupape à coulisse (1) peut, lors de l'ouverture, avant de quitter son siège de soupape et en réduisant l'espace creux de fuite (8), se placer contre l'autre corps de soupape à coulisse (2), lequel est pourvu d'un prolongement tubulaire (9), qui sort hermétiquement du boîtier de soupape (9), et relie l'espace creux de fuite (8) à l'environnement du dispositif à soupapes, et dans lequel les deux corps de soupape à coulisse (1, 2) peuvent être amenés chacun dans une position de vidange par une course partielle en direction opposée au mouvement d'ouverture, caractérisé en ce que les deux corps de soupape à coulisse (1, 2), qui peuvent être amenés dans la position de vidange respective indépendamment l'un de l'autre, sont libérés de leurs sièges de soupape respectifs (6, resp. 7) vers leur position de vidange et s'appuient chacun contre une butée de boîtier respective (13, resp. 14) munie de passages pour agent de vidange (11, resp. 12).

2. Dispositif à double soupape selon la revendication 1, caractérisé en ce que le premier corps de soupape à coulisse (1) présente un plus petit diamètre que le deuxième corps de soupape à coulisse (2).

3. Dispositif à double soupape selon la revendication 1 ou 2, caractérisé en ce que le premier corps de soupape à coulisse (1) présente, sur son côté tourné vers le deuxième corps de soupape à coulisse (2), un bord de bride de butée (15) pour la butée de boîtier (13) associée.

4. Dispositif à double soupape selon l'une des revendications 1 à 3, caractérisé en ce que les deux corps de soupape à coulisse (1, 2) présentent chacun un chanfrein de butée (16) pour la butée de boîtier (13, 14) associée.

5. Dispositif à double soupape selon l'une des revendications 1 à 4, caractérisé en ce que les sièges de soupape (6, 7) sont munis de bagues d'étanchéité (17), qui sont tenues par des inserts de boîtier (18, 19).

6. Dispositif à double soupape selon l'une des revendications 1 à 5, caractérisé en ce que les deux corps de soupape à coulisse (1, 2) peuvent être actionnés depuis un côté à l'aide d'un mécanisme de soupape (20).

7. Dispositif à double soupape selon la revendication 6, caractérisé en ce que le premier corps de soupape à coulisse (1) peut être actionné par une tige creuse (21), dans laquelle est placée une tige de commande (22) pour le deuxième corps de soupape à coulisse (2).

8. Dispositif à double soupape selon la revendication 7, caractérisé en ce que le premier corps de soupape à coulisse (1) présente à distance, du côté opposé au deuxième corps de soupape à coulisse (2), un cylindre d'étanchéité (23) qui, en position de vidange, peut être vidangé avec son siège d'étanchéité à travers une chambre annulaire (25), qui communique avec l'espace creux de fuite (8) par l'intermédiaire d'une conduite de jonction (26) passant entre la tige creuse (21) et la tige de commande (22).
